# EUROPEAN PATENT APPLICATION

(11) **EP 4 528 482 A1**
(43) Date of publication of application: **26.03.2025**
(21) Application number: 23825826.3
(22) Date of filing: 02.03.2023
(51) Int. Cl.: G06F 8/65

(54) **MICRO-SERVICE MIGRATION METHOD AND APPARATUS, AND COMPUTING DEVICE**

(30) Priority: 23.06.2022 CN 202210718836; 25.10.2022 CN 202211311317
(71) Applicant: Huawei Cloud Computing Technologies Co., Ltd., Guiyang, Guizhou 550025 (CN)
(72) Inventor: YANG, Yi, Guiyang, Guizhou 550025 (CN); ZHOU, Shengsheng, Guiyang, Guizhou 550025 (CN); LUO, Jianwen, Guiyang, Guizhou 550025 (CN)
(74) Representative: Pfenning, Meinig & Partner mbB
(86) International application number: PCT/CN2023/079205
(87) International publication number: WO 2023/246168

(57) **Abstract**

A microservice migration method is applied to a cloud platform configured to manage an instance that provides a microservice, and includes: obtaining stored first microservice configuration information of a target microservice from a first configuration center running on a first instance; generating second microservice configuration information of a migrated target microservice based on the first microservice configuration information; and sending the second microservice configuration information to a second configuration center running on a second instance, where the second configuration center is configured to store configuration information of the migrated target microservice. In this way, during microservice migration, microservice configuration information may be obtained from an original configuration center, and then based on the microservice configuration information, microservice configuration information adapted to a new configuration center is obtained. Finally, the microservice configuration information adapted to the new configuration center is sent to the new configuration center. In other words, automatic migration of the microservice configuration information is implemented, to improve microservice migration efficiency.

## Description

This application claims priorities to Chinese Patent Application No. 202210718836.X, filed with the China National Intellectual Property Administration on June 23, 2022 and entitled "CONFIGURATION MIGRATION METHOD, APPARATUS, AND DEVICE", and to Chinese Patent Application No. 202211311317.8, filed with the China National Intellectual Property Administration on October 25, 2022 and entitled "MICROSERVICE MIGRATION METHOD AND APPARATUS, AND COMPUTING DEVICE", both of which are incorporated herein by reference in their entireties.

### TECHNICAL FIELD

This application relates to the field of information technologies (information technology, IT), and in particular, to a microservice migration method and apparatus, and a computing device.

### BACKGROUND

With continuous development of technologies, a service architecture gradually evolves from an original monolithic architecture to a microservice architecture. The microservice architecture is closely related to a registration center and a configuration center. Switching may be performed between different registration centers, and switching may also be performed between different configuration centers. For example, if a service needs to be configured on a cloud service, both the registration center and the configuration center may be migrated. However, currently, a migration process of the registration center or the configuration center is complex and inconvenient for operation.

### SUMMARY

This application provides a microservice migration method and apparatus, a computing device, a computing device cluster, a computer storage medium, and a computer product, to implement automatic migration of a configuration center and improve microservice migration efficiency.

According to a first aspect, this application provides a microservice migration method, and the method may be applied to a cloud platform. The cloud platform may be configured to manage an instance that provides a microservice. The method may include: obtaining stored first microservice configuration information of a target microservice from a first configuration center running on a first instance; generating second microservice configuration information of a migrated target microservice based on the first microservice configuration information; and sending the second microservice configuration information to a second configuration center running on a second instance, where the second configuration center is configured to store configuration information of the migrated target microservice.

In this way, during microservice migration, microservice configuration information may be obtained from an original configuration center, and then based on the microservice configuration information, microservice configuration information adapted to a new configuration center is obtained. Finally, the microservice configuration information adapted to the new configuration center is sent to the new configuration center. In other words, automatic migration of the microservice configuration information is implemented, to improve microservice migration efficiency.

In a possible implementation, the generating second microservice configuration information of a migrated target microservice based on the first microservice configuration information includes: performing format conversion on the first microservice configuration information of the target microservice, to generate the second microservice configuration information corresponding to a microservice type of the second configuration center. In this way, the microservice configuration information adapted to the new configuration center is obtained through format conversion.

In a possible implementation, the method further includes: bringing the first configuration center offline in response to a first offline instruction.

In a possible implementation, before the sending the second microservice configuration information to a second configuration center running on a second instance, the method further includes: obtaining a correspondence between the second instance and the first configuration center; and creating, based on the second microservice configuration information and the correspondence, the second instance for running the second configuration center.

In a possible implementation, before the sending the second microservice configuration information to a second configuration center running on a second instance, the method further includes: obtaining a correspondence between the second instance and the first configuration center; and creating and running the second configuration center on a pre-created second instance based on the second microservice configuration information and the correspondence. Alternatively, the second configuration center may be pre-created, and the second configuration center and the second instance that correspond to the first configuration center are run based on a correspondence between the second instance and the first configuration center.

In a possible implementation, the obtaining a correspondence between the second instance and the first configuration center includes: obtaining a correspondence between an identifier of the second instance and the first configuration center, where the identifier includes an internet protocol IP address and/or an instance ID.

In a possible implementation, the method further includes: providing a first configuration interface, where the first configuration interface is configured to receive a configuration center management policy set by a user, and the configuration center management policy is used to switch configuration monitoring of the target microservice from the first configuration center to the second configuration center. In this way, the cloud platform can obtain a configuration center association policy delivered by the user by using the new configuration center, so that the configuration monitoring of the target microservice can be adjusted according to the policy.

In a possible implementation, a service type of the first configuration center is different from the service type of the second configuration center.

In a possible implementation, before generating the second microservice configuration information of the migrated target microservice based on the first microservice configuration information that is of the target microservice and that is stored in the first configuration center, the method further includes: providing a second configuration interface, where the second configuration interface is configured to receive the service type that is of the second configuration center and that is set by the user. In this way, the cloud platform can obtain the service type that is of the second configuration center and that is delivered by the user by using the new configuration center, so that a subscription mode of the target microservice can be adjusted based on the service type.

In a possible implementation, the method further includes: sending a first microservice registration request to a first registration center, where the first microservice registration request is used to request to register the migrated target microservice with the first registration center, and microservice registration with the first registration center has been performed on the target microservice; and sending a second microservice registration request to a second registration center running on a third instance, where the second microservice registration request is used to request to register the migrated target microservice with the second registration center.

In a possible implementation, the method further includes: bringing the first registration center offline in response to a second offline instruction.

In a possible implementation, the first microservice configuration information includes one or more of the following: a startup parameter of the target microservice, an identifier of the target microservice, a quantity of threads related to the target microservice, a cache size related to the target microservice, active data, a blocklist, or a trustlist.

According to a second aspect, this application provides a microservice migration apparatus. The apparatus may be deployed on a cloud platform. The cloud platform may be configured to manage an instance that provides a microservice. The apparatus may include a communication module and a processing module. The communication module is configured to obtain stored first microservice configuration information of a target microservice from a first configuration center running on a first instance. The processing module is configured to generate second microservice configuration information of a migrated target microservice based on the first microservice configuration information. The processing module is further configured to send the second microservice configuration information to a second configuration center running on a second instance, where the second configuration center is configured to store configuration information of the migrated target microservice.

In a possible implementation, when generating the second microservice configuration information of the migrated target microservice based on the first microservice configuration information, the processing module is specifically configured to: perform format conversion on the first microservice configuration information of the target microservice, to generate the second microservice configuration information corresponding to a microservice type of the second configuration center.

In a possible implementation, the processing module is further configured to bring the first configuration center offline in response to a first offline instruction.

In a possible implementation, before sending the second microservice configuration information to the second configuration center running on the second instance, the processing module is further configured to: obtain a correspondence between the second instance and the first configuration center; and create, based on the second microservice configuration information and the correspondence, the second instance for running the second configuration center.

In a possible implementation, before sending the second microservice configuration information to the second configuration center running on the second instance, the processing module is further configured to: obtain a correspondence between the second instance and the first configuration center; and create and run the second configuration center on a pre-created second instance based on the second microservice configuration information and the correspondence. Alternatively, the second configuration center may be pre-created, and the second configuration center and the second instance that correspond to the first configuration center are run based on a correspondence between the second instance and the first configuration center.

In a possible implementation, when obtaining the correspondence between the second instance and the first configuration center, the processing module is specifically configured to: obtain a correspondence between an identifier of the second instance and the first configuration center, where the identifier includes an internet protocol IP address and/or an instance ID.

In a possible implementation, the processing module is further configured to provide a first configuration interface, where the first configuration interface is configured to receive a configuration center management policy set by a user, and the configuration center management policy is used to switch configuration monitoring of the target microservice from the first configuration center to the second configuration center.

In a possible implementation, a service type of the first configuration center is different from the service type of the second configuration center.

In a possible implementation, before generating the second microservice configuration information of the migrated target microservice based on the first microservice configuration information that is of the target microservice and that is stored in the first configuration center, the processing module is further configured to provide a second configuration interface, where the second configuration interface is configured to receive the service type that is of the second configuration center and that is set by the user.

In a possible implementation, the communication module is further configured to send a first microservice registration request to a first registration center, where the first microservice registration request is used to request to register the migrated target microservice with the first registration center, and microservice registration with the first registration center has been performed on the target microservice. The communication module is further configured to send a second microservice registration request to a second registration center running on a third instance, where the second microservice registration request is used to request to register the migrated target microservice with the second registration center.

In a possible implementation, the processing module is further configured to bring the first registration center offline in response to a second offline instruction.

In a possible implementation, the first microservice configuration information includes one or more of the following: a startup parameter of the target microservice, an identifier of the target microservice, a quantity of threads related to the target microservice, a cache size related to the target microservice, active data, a blocklist, or a trustlist.

According to a third aspect, this application provides a computing device, including at least one memory, configured to store a program; and at least one processor, configured to execute the program stored in the memory. When the program stored in the memory is executed, the processor is configured to perform the method according to any one of the first aspect or the possible implementations of the first aspect.

According to a fourth aspect, this application provides a computing device cluster, including at least one computing device, and each computing device includes a processor and a memory. A processor of the at least one computing device is configured to execute instructions stored in a memory of the at least one computing device, to enable the computing device cluster to perform the method according to any one of the first aspect or the possible implementations of the first aspect.

According to a fifth aspect, this application provides a computer-readable storage medium. The computer-readable storage medium stores a computer program. When the computer program is run on a processor, the processor is enabled to perform the method according to any one of the first aspect or the possible implementations of the first aspect.

According to a sixth aspect, this application provides a computer program product. When the computer program product runs on a processor, the processor is enabled to perform the method according to any one of the first aspect or the possible implementations of the first aspect.

It may be understood that, for beneficial effects of the second aspect to the sixth aspect, refer to related descriptions in the first aspect. Details are not described herein again.

### BRIEF DESCRIPTION OF DRAWINGS

The following briefly describes the accompanying drawings to be used in descriptions of embodiments or the prior art.
FIG. 1 is a diagram of a migration process of a registration center and a configuration center according to an embodiment of this application;
FIG. 2 is a diagram of another migration process of a registration center and a configuration center according to an embodiment of this application;
FIG. 3A and FIG. 3B are a schematic flowchart of a microservice migration method according to an embodiment of this application;
FIG. 4 is a diagram of a scenario before microservice migration according to an embodiment of this application;
FIG. 5 is a diagram of comparison before and after interception enhancement according to an embodiment of this application;
FIG. 6 is a diagram of a consumer service migration process according to an embodiment of this application;
FIG. 7 is a diagram of a provider service migration process according to an embodiment of this application;
FIG. 8 is a diagram of a scenario existing after a consumer service and a provider service are brought offline according to an embodiment of this application;
FIG. 9 is a diagram of a scenario after microservice migration according to an embodiment of this application;
FIG. 10 is a diagram of a structure of a microservice migration apparatus according to an embodiment of this application;
FIG. 11 is a diagram of a structure of a computing device according to an embodiment of this application; and
FIG. 12 is a diagram of a structure of a computing device cluster according to an embodiment of this application.

### DESCRIPTION OF EMBODIMENTS

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

The terms "first", "second", and the like in the specification and claims are used to distinguish between different objects, but are not used to describe a particular order of the objects. For example, a first response message, a second response message, and the like are used to distinguish between different response messages, but are not used to describing a particular order of the response messages.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise specified, "a plurality of" means two or more. For example, a plurality of processing units are two or more processing units, and a plurality of elements are two or more elements.

First, technical terms in this application are described.

### (1) Microservice

The microservice (also referred to as a "service") is an architecture and organization method for developing software, and may include small independent services that perform communication through a clearly defined application programming interface (application programming interface, API). The services may be responsible by small independent teams. For example, the microservice may be configured on an instance, where the instance may be at least one of a computer, a server, a cloud computing platform (that is, a "cloud platform"), a virtual machine, a container, or the like.

### (2) Registration center

The registration center, which is an "address book" in a microservice architecture, records a mapping relationship between a microservice and a microservice address. The registration center provides an independent service in an entire microservice architecture. The service does not need to implement service functions of a system, but is used to perform microservice registration and microservice discovery for the entire microservice system, and monitor and manage a microservice health status. For example, the registration center may be configured on a node. The node may be a computer, a server, a cloud computing platform (that is, a "cloud platform"), a virtual machine, or the like. For example, the registration center may have the following functions: a microservice registry, microservice registration and discovery, and microservice check. The microservice registry is a core of the registration center, and is used to record information about each microservice, for example, a name, an internet protocol (internet protocol, IP) address, and a port of the microservice. The microservice registry provides a query API and a management API. The query API is configured to query an available microservice instance, and the management API is configured to register and deregister the microservice. The microservice registration is a process in which the microservice registers the information about the microservice with the registration center when the microservice is started. The microservice discovery is a mechanism of querying an available microservice list and a network address. The microservice check means that the registration center uses a specific mechanism to periodically check a registered microservice. If the registration center discovers that a specific instance cannot be accessed for a long time, the instance is removed from the microservice registry.

In addition, the registration center mainly relates to three roles: a microservice provider, a microservice consumer, and a registration center. A relationship between the three roles is as follows: When each microservice is started, the microservice registers the information about the microservice such as a network address with the registration center, and the registration center stores data. The microservice consumer queries an address of the microservice provider from the registration center, and invokes an interface of the microservice provider by using the address. Each microservice communicates with the registration center by using a specific mechanism (for example, heartbeat). If the registration center cannot communicate with a specific microservice for a long time, the instance is deregistered. When the network address of the microservice changes (for example, an instance is added or an IP changes), the microservice is registered with the registration center again. In this way, the microservice consumer does not need to manually modify the network address of the provider.

### (3) Configuration center

The configuration center may be configured to manage a configuration used by the microservice. The microservice is connected to the configuration center, and can obtain microservice configuration information and changes of the microservice configuration information from the configuration center. The configuration center is also a core component of another microservice management and control function. For example, a microservice governance rule may be delivered by using the configuration center. For example, the configuration center may be configured on a node. The node may be a computer, a server, a cloud computing platform (that is, a "cloud platform"), a virtual machine, or the like. In some embodiments, the registration center and the configuration center may be configured on a same node, or may be configured on different nodes. This is not limited herein. For example, the configuration center may be kie, or may be nacos. In some embodiments, different configuration centers have different service types. For example, when the configuration center is kie, a service type of the configuration center is kie; or when the configuration center is nacos, a service type of the configuration center is nacos.

### (3) Registry

The registry is a mapping relationship table between a microservice and an IP address of the microservice. A microservice subscriber may obtain the registry by subscribing to the registration center, to discover a downstream microservice. For example, for the microservice subscriber and the downstream microservice, when a microservice A needs to invoke a microservice B, the microservice A is the microservice subscriber, and the microservice B is the downstream microservice.

### (4) Dual registration

The dual registration means that a microservice is registered with two registration centers simultaneously, so that microservice subscribers of both the two registration centers can discover and invoke the microservice.

### (5) Service subscription

The service subscription is a behavior of a microservice for the registration cente, where one or more microservices are subscribed to. When an instance of a subscribed microservice changes, the subscribed microservice perceives an instance change.

### (6) Dual subscription

The dual subscription means that a microservice subscriber subscribes to two registration centers simultaneously. The microservice subscriber may simultaneously invoke microservices registered with the two registration centers.

### (7) Configuration monitoring

The configuration monitoring means that a microservice perceives a configuration change by focusing on one or more configuration modifications, and such a behavior that the microservice focuses on the configuration change may be referred to as configuration monitoring.

### (8) Dynamic configuration

The dynamic configuration means that the microservice may perceive the configuration change (for example, a configuration change of a configuration center) in real time, and perform related actions based on the configuration change.

### (9) Traffic switching

The traffic switching means that traffic is switched, typically from one system to another system.

### (10) Rolling restart

The rolling restart is usually performed across a plurality of microservice instances, and a microservice instance is stopped and started in incremental mode, to ensure that a microservice is updated without interrupting a microservice.

### (11) Agent (agent) technology

The agent technology is a technology in the software field that can dynamically modify, without affecting normal compilation of a host application, bytecode or library functions of the host application when the host application is started.

### (12) Java agent

The java agent is a type of agent and is a new characteristic introduced after JDK1.5. The java agent allows a user to modify bytecode after a JVM reads a bytecode file into a memory and before the JVM generates a Class object in a java heap by using a corresponding byte stream. The JVM uses modified bytecode to create the Class object, to implement non-code-intrusive service logic modification and replacement of java applications.

The following describes solutions provided in embodiments of this application.

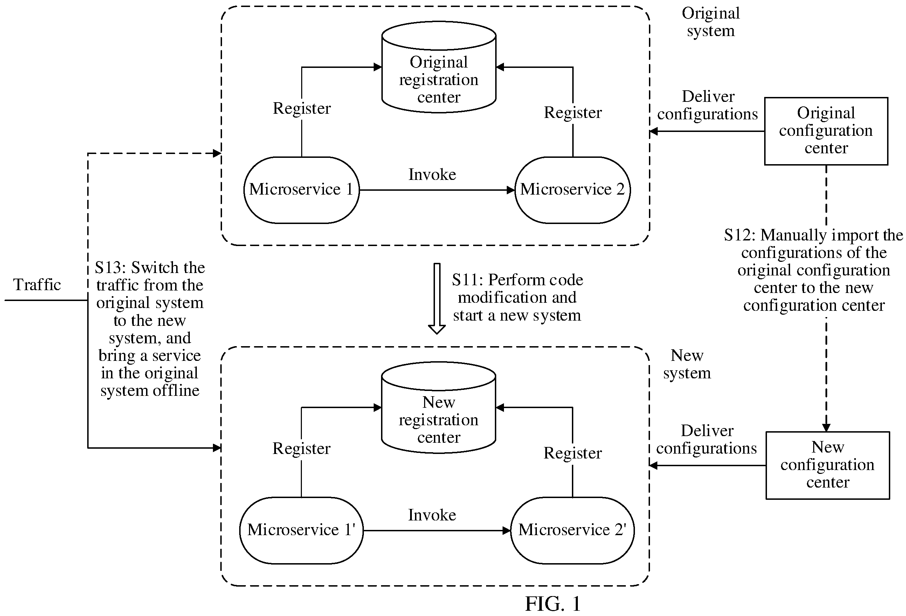

For example, FIG. 1 shows a migration process of a registration center and a configuration center. As shown in FIG. 1, an original system includes an original registration center (namely, a previous registration center), an original configuration center (namely, a previous configuration center), a microservice 1, and a microservice 2. Both the microservice 1 and the microservice 2 may be registered with the original registration center, and the microservice 1 may invoke the microservice 2. The original configuration center may deliver configurations to the microservice 1 and the microservice 2. When the original registration center and the original configuration center need to be migrated, to enable the microservice 1 and the microservice 2 to adapt to a new registration center (namely, a current registration center) and a new configuration center (namely, a current configuration center), code modification may be performed on the microservice 1 and the microservice 2, to obtain a microservice 1' and a microservice 2'. In addition, both the microservice 1' and the microservice 2' may be registered with the new registration center, and the microservice 1' may invoke the microservice 2'. Then, related microservice configuration information in the original configuration center may be manually exported, and the related microservice configuration information is parsed and conversed to adapt to the new configuration center, and is imported to the new configuration center. Then, the new configuration center may deliver configurations to the microservice 1' and the microservice 2'. At this time, a new system is available. Finally, traffic switching may be performed to gradually introduce all traffic to the new system and bring microservices in the original system offline.

In the migration manner shown in FIG. 1, although migration of the registration center and the configuration center can be implemented, code modification needs to be performed for the microservice, causing large impact. In addition, the configuration center needs to be manually migrated, a workload is heavy, and efficiency is low. In addition, to ensure that a service is not interrupted, the original system and the new system need to run at the same time, causing large resource consumption.

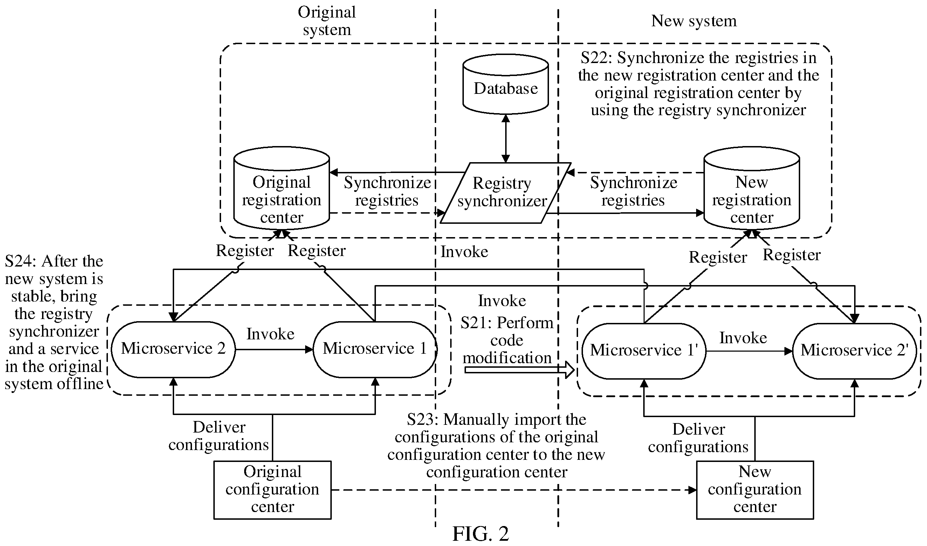

For example, FIG. 2 shows another migration process of a registration center and a configuration center. As shown in FIG. 2, an original system includes an original registration center (namely, a previous registration center), an original configuration center (namely, a previous configuration center), a microservice 1, and a microservice 2. Both the microservice 1 and the microservice 2 may be registered with the original registration center, and the microservice 1 may invoke the microservice 2. The original configuration center may deliver configurations to the microservice 1 and the microservice 2. When the original registration center and the original configuration center need to be migrated, to enable the microservice 1 and the microservice 2 to adapt to a new registration center (namely, a current registration center) and a new configuration center (namely, a current configuration center), code modification also needs to be performed on the microservice 1 and the microservice 2, to obtain a microservice 1' and a microservice 2'. In addition, both the microservice 1' and the microservice 2' may be registered with the new registration center, and the microservice 1' may invoke the microservice 2'. Then, registries in the new registration center and the original registration center may be synchronized by using a registry synchronizer. In this way, the microservice 1' may discover the microservice 2, and the microservice 1 may discover the microservice 2', so that the microservice 1' may invoke the microservice 2, and the microservice 1 may invoke the microservice 2'. Then, related microservice configuration information in the original configuration center may be manually exported, and the related microservice configuration information is parsed and conversed to adapt to the new configuration center, and is imported to the new configuration center. Then, the new configuration center may deliver configurations to the microservice 1' and the microservice 2'. At this time, a new system is available. Finally, after the new system runs stably, microservices in the original system may be brought offline.

In a migration manner shown in FIG. 2, although migration of the registration center and the configuration center can be implemented, code modification also needs to be performed on the microservice, causing large impact. In addition, the configuration center needs to be manually migrated, a workload is heavy, and efficiency is low. In addition, to ensure that a service is not interrupted, the original system and the new system need to run at the same time for a period of time, causing large resource consumption. In addition, the "registry synchronizer" component needs to be added. This increases migration costs.

In view of this, embodiments of this application provide a microservice migration method. According to the method, configurations of a microservice are enhanced mainly based on an agent technology, so that during microservice migration, configuration content is intercepted and obtained in a non-intrusive manner based on an original configuration center used by the current microservice, and undergoes configuration format conversion and is pushed to a new configuration center, to automatically implement a configuration migration action. In this way, automatic migration of the configuration center is implemented without performing code modification on the microservice. In addition, according to the method, microservice registration can be further enhanced, so that when the microservice is registered with an original registration center, the microservice may be synchronously registered with a new registration center, to implement dual registration of the microservice. Further, after initial migration of the microservice is implemented, a corresponding policy may be delivered by using the new configuration center, to shield interaction between the microservice and the original registration center and the original configuration center. In this way, the original registration center and the original configuration center are brought offline, to implement final migration of the microservice.

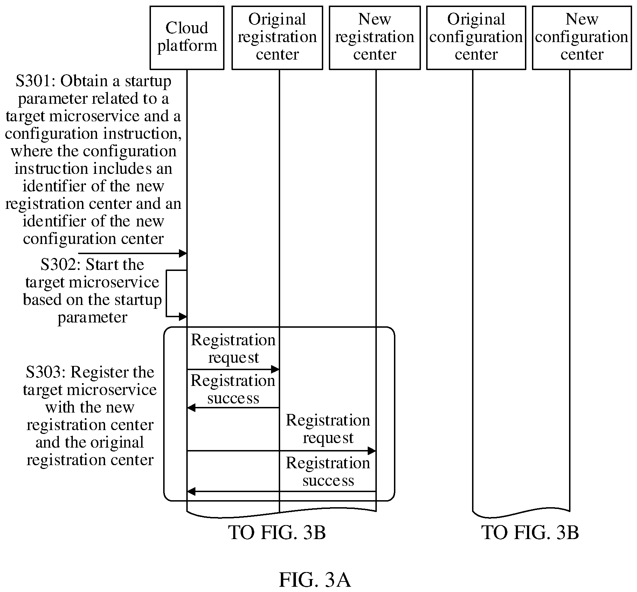

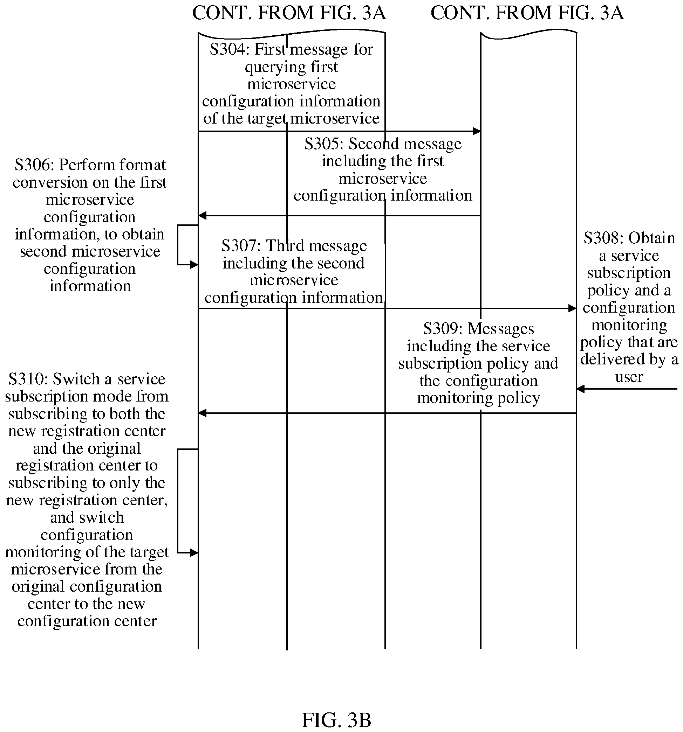

For example, FIG. 3A and FIG. 3B show a microservice migration method. As shown in FIG. 3A and FIG. 3B, the microservice migration method may include the following steps.

S301: A cloud platform obtains a startup parameter that is related to a target microservice and that is uploaded by a user and a configuration instruction delivered by the user, where the configuration instruction includes an identifier of a new registration center and an identifier of a new configuration center.

In this embodiment, the cloud platform may provide a user interface (user interface, UI) for the user. An ingress for the user to upload a file may be set in the user interface. Further, the user may upload the startup parameter related to the target microservice via the user interface provided by the cloud platform. The startup parameter may include a bytecode enhancement package and a service application package associated with the target microservice. The bytecode enhancement package may be at least used to add a configuration migration function and/or a registration migration function to original code without changing logic of the original code related to the target microservice in the service application package. The bytecode enhancement package may be implemented based on the foregoing agent technology. The service application package is mainly used to configure the target microservice in the cloud platform. For example, the cloud platform may be configured to manage an instance (for example, a container or a thread) that provides a microservice.

In addition, the user may further deliver some configuration instructions via the UI provided by the cloud platform. The configuration instruction may include the identifier of the new registration center and the identifier of the new configuration center, so that the new registration center and the new configuration center can be found in a registration and configuration process. In some embodiments, the identifier of the new registration center may be an internet protocol (internet protocol, IP) address of the new registration center, a domain name of the new registration center, an engine name of the new registration center, or the like. The identifier of the new configuration center may be an IP address of the new configuration center, a domain name of the new configuration center, an engine name of the new configuration center, or the like.

In some embodiments, the configuration instruction may further include an identifier of an original registration center and an identifier of an original configuration center. In this way, the cloud platform may communicate with the original registration center and the original configuration center. In some embodiments, a configuration instruction including the identifier of the original configuration center may be referred to as a first instruction, and a configuration instruction including the identifier of the original registration center may be referred to as a second instruction. In some embodiments, when the configuration instruction includes the identifier of the new configuration center and the identifier of the original configuration center, the cloud platform may determine that there is a specific correspondence between the two identifiers. In addition, it may be determined that there is a correspondence between an instance (for example, a virtual machine or a container) for running the original configuration center and the identifier of the new configuration center, or there is a correspondence between an instance for running the new configuration center and the identifier of the original configuration center.

In some embodiments, time when the user uploads the startup parameter and delivers the configuration instruction may be selected based on an actual situation. This is not limited herein. For example, the user may deliver the configuration instruction immediately after uploading the startup parameter, or may deliver the configuration instruction after a period of time (for example, one hour, one day, one month, or one year) after uploading the startup parameter. In addition, a user who uploads the startup parameter and a user who delivers the configuration instruction may be a same user, or may be different users. This is not limited herein.

In some embodiments, the original registration center may run on an instance. For example, the original registration center may run on a physical machine, a virtual machine, or a container. Similarly, the original configuration center may also run on an instance. For example, the original configuration center may run on a physical machine, a virtual machine, or a container. Microservice registration with the original registration center has been performed on the target microservice. The original configuration center stores microservice configuration information needed by the target microservice.

S302: The cloud platform starts the target microservice based on the startup parameter.

In this embodiment, after obtaining the startup parameter, the cloud platform may configure the target microservice in the cloud platform based on the service application package, and start the target microservice. For example, an instance corresponding to the target microservice may be but is not limited to one thread.

S303: The cloud platform registers the target microservice with the new registration center and the original registration center.

In this embodiment, after the target microservice is started, the cloud platform may send a message including a microservice registration request to the original registration center, to request to register a migrated target microservice with the original registration center. In addition, the cloud platform may send a message including a microservice registration request to the new registration center, to request to register the migrated target microservice with the new registration center. After obtaining the request sent by the cloud platform, the original registration center may register the target microservice with the original registration center, and return a registration success message to the cloud platform. After obtaining the request sent by the cloud platform, the new registration center may register the target microservice with the new registration center, and return a registration success message to the cloud platform. In this way, dual registration of the target microservice is implemented, to implement migration of the registration center.

In some embodiments, the cloud platform may first create the new registration center on an instance (for example, a virtual machine or a container). For example, the cloud platform may send a request for creating the new registration center to a virtual machine, to create the new registration center on the virtual machine. Then, the microservice registration request is sent to the new registration center. Certainly, the new registration center may alternatively be pre-created on another instance (for example, a physical machine, a virtual machine, or a container). This may be specifically determined based on an actual situation.

In some embodiments, the original registration center may be referred to as a first registration center, and the new registration center may be referred to as a second registration center.

S304: The cloud platform sends, to the original configuration center, a first message for querying first microservice configuration information of the target microservice.

S305: The original configuration center sends a second message including the first microservice configuration information to the cloud platform.

In this embodiment, after obtaining the first message sent by the cloud platform, the original configuration center may send a related configuration of the user for the target microservice to the cloud platform, that is, send the second message including the first microservice configuration information to the cloud platform. In some embodiments, the first microservice configuration information may include one or more of the following: the startup parameter of the target microservice, an identifier of the target microservice, a quantity of threads related to the target microservice, a cache size related to the target microservice, active data, a blocklist, a trustlist, or the like.

In some embodiments, S304 and S305 may be understood as a step in which the cloud platform obtains, from an original configuration center running on an instance, microservice configuration information that is of a target microservice and that is stored in the original configuration center.

In some embodiments, the original configuration center may be referred to as a first registration center.

S306: The cloud platform performs format conversion on the first microservice configuration information, to obtain second microservice configuration information.

In this embodiment, during microservice migration, types of the new configuration center and the original configuration center are usually different. Therefore, formats of microservice configuration information adapted to the new configuration center and the original configuration center are also different. Therefore, after obtaining the first microservice configuration information, the cloud platform may perform format conversion on the first microservice configuration information, to obtain the second microservice configuration information adapted to the new configuration center. For example, a format of the first microservice configuration information may include any one of YAML, JSON, TEXT, Properties, INI, and XML, a format of the second microservice configuration information may also include any one of YAML, JSON, TEXT, Properties, INI, and XML, and the format of the first microservice configuration information is different from the format of the second microservice configuration information.

In some embodiments, S306 may be understood as a step in which the cloud platform generates the second microservice configuration information of the migrated target microservice based on the first microservice configuration information.

It should be noted that S306 is an optional step. To be specific, when the types of the two configuration centers are the same, format conversion may not be performed on the first microservice configuration information.

S307: The cloud platform sends a third message including the second microservice configuration information to the new configuration center.

In this embodiment, after obtaining the second microservice configuration information, the cloud platform may send the microservice configuration information to the new configuration center, that is, send the third message including the second microservice configuration information to the new configuration center. In this way, the microservice configuration information in the original configuration center is migrated to the new configuration center.

In some embodiments, before S307, the cloud platform may further first create the instance for running the new configuration center, for example, one or more of a virtual machine, a container, and other instances, to create, on the instance, the new configuration center for storing the second microservice configuration information. For example, when performing a migration operation on the target microservice on the user interface provided by the cloud platform, the user may select the original configuration center and an identifier of the instance for running the new configuration center, for example, an IP address and/or an instance ID. In this way, the cloud platform may obtain a correspondence between the original configuration center and the identifier of the instance for running the new configuration center, that is, obtain a correspondence between the original configuration center and the instance for running the new configuration center. Then, the cloud platform may create, based on the correspondence and the second microservice configuration information, the instance for running the new configuration center. In a process of creating the instance for running the new configuration center, the cloud platform may configure the second microservice configuration information in the new configuration center of the instance.

Certainly, the new configuration center may alternatively be pre-created on another instance (for example, a physical machine, a virtual machine, or a container). This may be specifically determined based on an actual situation.

In some embodiments, the new configuration center may be referred to as a second registration center.

S308: The new configuration center obtains a microservice subscription policy and a configuration monitoring policy that are delivered by the user.

In this embodiment, the user may deliver the microservice subscription policy and the configuration monitoring policy in the new configuration center. The microservice subscription policy is a policy for switching a microservice subscription mode from dual registration centers to a single registration center. The microservice subscription policy may be for switching the microservice subscription mode from subscribing to both the new registration center and the original registration center to subscribing to only the new registration center, to shield interaction between the target microservice and the original registration center. The configuration monitoring policy is to switch configuration monitoring of the target microservice from the original configuration center to the new configuration center, to shield interaction between the target microservice and the original configuration center.

S309: The new configuration center sends a message including the microservice subscription policy and a message including the configuration monitoring policy to the cloud platform.

In this embodiment, after the user delivers the microservice subscription policy and the configuration monitoring policy, the new configuration center may send these policies to the cloud platform for execution. In this case, the message that includes the microservice subscription policy and that is sent by the new configuration center may indicate the cloud platform to switch the microservice subscription mode. The message that includes the configuration monitoring policy and that is sent by the new configuration center may indicate the cloud platform to switch the configuration monitoring of the target microservice.

In some embodiments, the cloud platform may provide two configuration interfaces. One of the configuration interfaces may be configured to receive a configuration center management policy set by the user. The configuration center management policy may be used to switch configuration monitoring of the target microservice from the original configuration center to the new configuration center. In this way, after the new configuration center obtains the configuration center management policy (that is, the configuration monitoring policy) set by the user, the cloud platform may obtain, through the configuration interface, the configuration center management policy sent by the new configuration center, and perform a subsequent step.

The other configuration interface may be configured to receive a service type that is of the new configuration center and that is set by the user. In this way, when the new configuration center obtains the microservice subscription policy set by the user, the cloud platform may obtain, through the configuration interface, the microservice subscription policy sent by the new configuration center, to obtain the service type that is of the new configuration center and that is set by the user, and perform a subsequent step. For example, when the new registration center is nacos, and the microservice subscription policy is subscribing to only nacos, the service type of the new configuration center is nacos.

S310: The cloud platform switches the microservice subscription mode of the target microservice from subscribing to both the new registration center and the original registration center to subscribing to only the new registration center, and switches the configuration monitoring of the target microservice from the original configuration center to the new configuration center.

In this embodiment, after obtaining the microservice subscription policy and the configuration monitoring policy that are sent by the new configuration center, the cloud platform may switch the microservice subscription mode of the target microservice from subscribing to both the new registration center and the original registration center to subscribing to only the new registration center, to shield the interaction between the target microservice and the original registration center. In addition, configuration monitoring of the target microservice may be switched from the original configuration center to the new configuration center, to shield the interaction between the target microservice and the original configuration center. In this way, migration of the registration center and the configuration center is implemented. For example, the new registration center is associated with the new configuration center, and the original registration center is associated with the original configuration center.

Further, after the new registration center runs for a specific period of time, or the cloud platform receives an offline instruction delivered by the user, the original registration center may be brought offline. After the new configuration center runs for a specific period of time or the cloud platform receives an offline instruction delivered by the user, the original configuration center may be brought offline. In addition, after bringing the original registration center and the original configuration center offline, the cloud platform may bring microservices adapted to the original registration center and the original configuration center offline at the same time.

Therefore, during microservice migration, a dual registration manner is used, the microservice configuration information in the original configuration center is intercepted, and the microservice configuration information undergoes format conversion and is sent to the new configuration center, to implement automatic microservice migration and improve migration efficiency. In addition, in an initial phase of the migration, after the bytecode enhancement package based on the agent technology and the service application package related to the target microservice are uploaded, the target microservice may be deployed on the cloud platform, and a subsequent operation is implemented. In this process, code modification does not need to be performed on the target microservice, thereby reducing migration difficulty and improving a migration generalization capability.

It should be understood that a solution in which the cloud platform is replaced with another component or device still falls within the protection scope of this application. In addition, in addition to that both the registration center and the configuration center are migrated, only the configuration center may be migrated or only the registration center may be migrated. A procedure of migrating a single center still falls within the protection scope of this application. For the migration procedure, refer to descriptions of the migration in FIG. 3A and FIG. 3B. Details are not described herein again. In addition, when both the registration center and the configuration center are migrated, the registration center may be migrated first, and then the configuration center is migrated; or the configuration center may be migrated first, and then the registration center is migrated; or the registration center and the configuration center may be migrated at the same time. This is not limited herein.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, may be partially performed, or may be completely performed based on an actual situation. This is not limited herein. In addition, all or some of any features in the foregoing embodiments may be freely and randomly combined with each other in the case of no conflict. A combined technical solution also falls within the scope of this application.

For ease of understanding the process described in FIG. 3A and FIG. 3B, the following uses a java agent technology and migration of two microservices as an example to demonstrate a microservice migration process provided in embodiments of this application. It should be understood that, when a quantity of microservices that need to be migrated is greater than two, refer to the following descriptions. Details are not described herein.

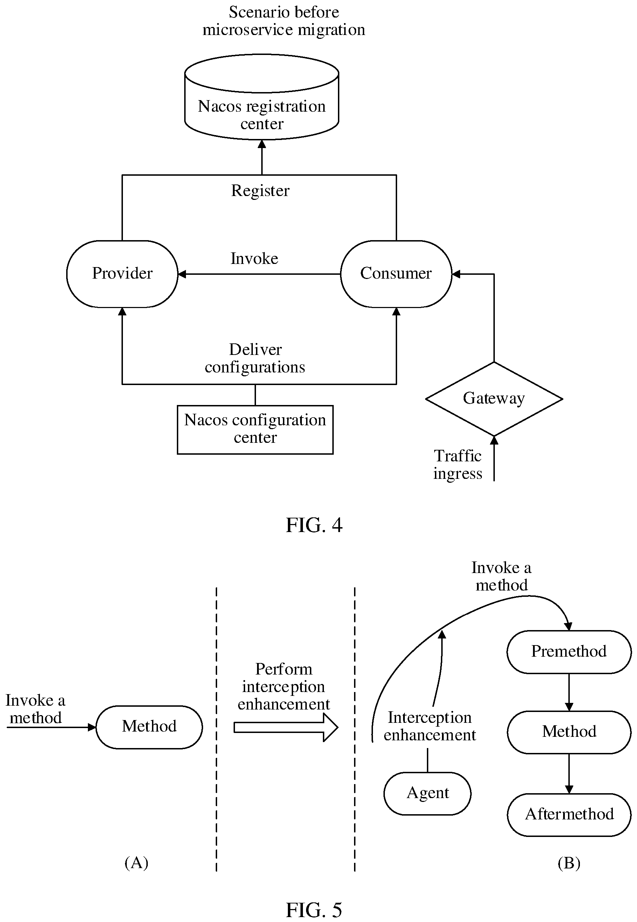

For example, an initial scenario may be shown in FIG. 4. In this scenario, there is one provider microservice and one consumer microservice, and both the provider microservice and the consumer microservice are registered with a nacos registration center. In addition, configurations may be delivered to the two microservices by using a nacos configuration center. In this scenario, there is further a gateway (Gateway) layer. The gateway layer may perform user traffic distribution.

Based on the scenario shown in FIG. 4, the two microservices are smoothly migrated to a service center registration center and a kie configuration center. In a migration process, the two microservices may be sequentially migrated in a rolling restart manner. For ease of description, the following uses an example in which the consumer microservice is migrated first and then the provider microservice is migrated for description.

Before migration, a user may first start the service center registration center and the kie configuration center. Then, the user may add a startup parameter to a user interface provided by a cloud platform, and add respective identifiers of the service center registration center and the kie configuration center. For example, startup parameters added by the user may be javaagent:agent.jar, spring-boot-demo-consumer.jar, and spring-boot-demo-provider.jar.

agent.jar is a bytecode enhancement package, and interception enhancement on registration and configuration may be implemented by using agent.jar, to implement the method described in embodiments of this application. For the interception enhancement, as shown in FIG. 5, interception enhancement is not performed in (A) of FIG. 5, and in this case, when a method "method" is invoked, the method is directly invoked; and interception enhancement is performed in (B) of FIG. 5, and in this case, when a method "method" is invoked, interception enhancement may be performed on the method by using the agent. In this way, a premethod (premethod) and aftermethod (aftermethod) can be added before and after the "method" is invoked. In other words, after the enhancement, additional processing logic, for example, dual registration logic and configuration migration logic, can be added before and after the "method". In this way, the registration center and the configuration center are migrated in a non-intrusive manner based on agent development, without depending on a third-party component and without a need of original code modification on the microservice, to reduce a migration workload. spring-boot-demo-consumer.jar is a service application package associated with the consumer microservice, and the consumer microservice may be configured on the cloud platform by using spring-boot-demo-consumer.jar. spring-boot-demo-provider.jar is a service application package associated with the provider microservice, and the provider microservice may be configured on the cloud platform by using spring-boot-demo-provider.jar. In some embodiments, when the user needs to migrate only one microservice, the user may upload only a service application package associated with the microservice. When the user needs to migrate a plurality of microservices, the user may upload, at the same time, respective service application packages associated with the plurality of microservices, or may upload, at different time, respective service application packages associated with the plurality of microservices. For example, the user may upload, at a moment T1, a service application package associated with a microservice, and upload, at a moment T2 after the moment T1, a service application package associated with another microservice. This may be specifically determined based on an actual situation, and is not limited herein. In addition, the user may also first add the startup parameter to the cloud platform, add the respective identifiers of the service center registration center and the kie configuration center, and then start the service center registration center and the kie configuration center. This may be specifically determined based on an actual situation, and is not limited herein.

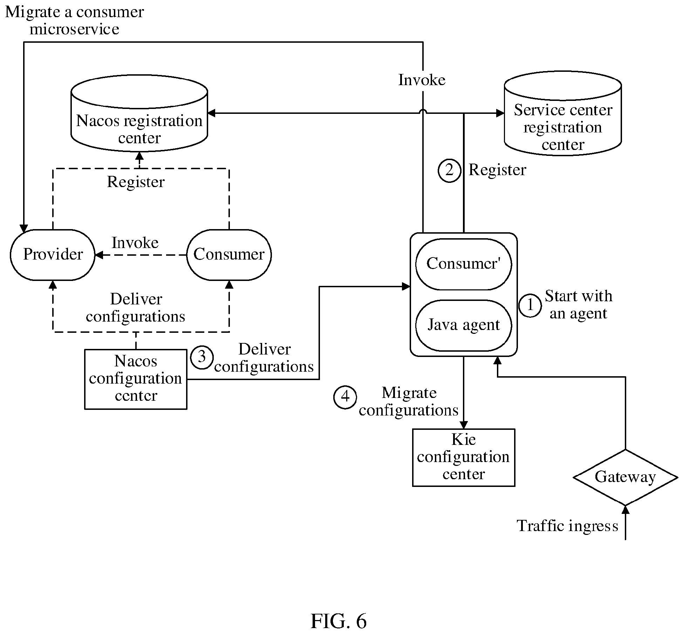

Further, after implementing corresponding configuration on the cloud platform, the user may deliver an instruction for triggering micro service migration by the user. As shown in FIG. 6, after obtaining the instruction delivered by the user, the cloud platform may include a java agent to start a consumer microservice. For ease of description, the consumer microservice started by the cloud platform including the java agent is referred to as a "consumer' microservice". Then, the cloud platform may register the consumer' microservice with both the nacos registration center and the service center registration center. Then, the cloud platform may obtain microservice configuration information of a consumer microservice adapted to the nacos registration center and the nacos configuration center from the nacos configuration center. Then, the cloud platform may perform type conversion on the microservice configuration information obtained by the cloud platform, to obtain microservice configuration information adapted to the kie configuration center. Then, the cloud platform may send converted microservice configuration information to the kie configuration center. Then, when traffic enters, the consumer' microservice may discover the provider microservice and invoke the provider microservice. In this way, initial migration of the consumer microservice is implemented. A dashed line in FIG. 6 represents an interaction status in the initial scenario described in FIG. 4.

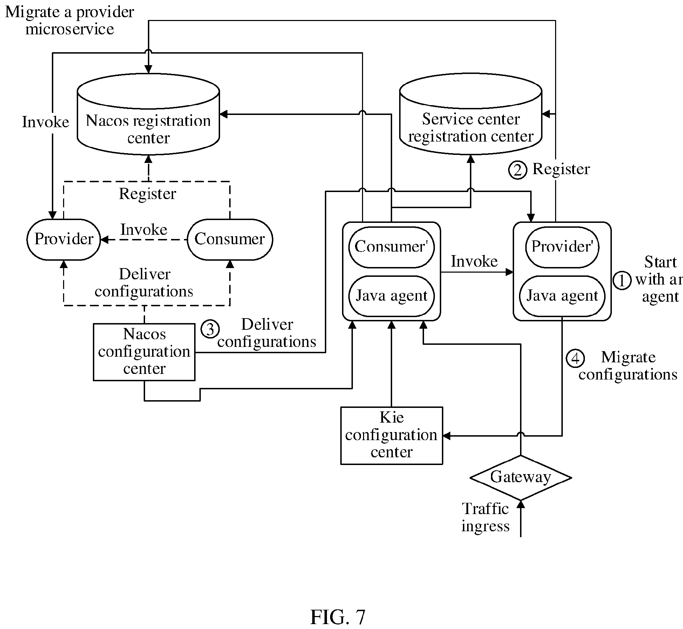

After the migration of the consumer microservice is implemented, as shown in FIG. 7, the cloud platform may include the java agent to start a provider microservice. For ease of description, the provider microservice started by the cloud platform including the java agent is referred to as a "provider' microservice". Then, the cloud platform may register the provider' microservice with both the nacos registration center and the service center registration center. Then, the cloud platform may obtain microservice configuration information of a provider microservice adapted to the nacos registration center and the nacos configuration center from the nacos configuration center. Then, the cloud platform may perform format conversion on the microservice configuration information obtained by the cloud platform, to obtain microservice configuration information adapted to the kie configuration center. Then, the cloud platform may send the converted microservice configuration information to the kie configuration center. Then, when the traffic enters, the consumer' microservice may discover the provider' microservice and invoke the provider' microservice. In this way, initial migration of the provider microservice is implemented. A dashed line in FIG. 7 represents the interaction status in the initial scenario described in FIG. 4.

Further, after initial migration of the consumer microservice and the provider microservice is implemented, when the traffic enters, the consumer' microservice may determine, in a load balancing manner, whether to invoke the provider microservice or the provider' microservice.

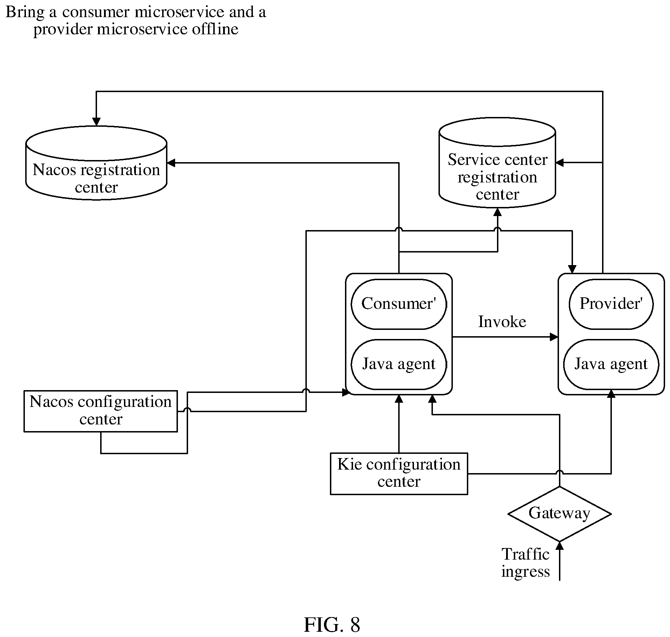

After the consumer' microservice and the provider' microservice run stably for a period of time, the consumer microservice and the provider microservice in the initial scenario may be brought offline. A scenario in this case may be shown in FIG. 8. Certainly, the consumer microservice and the provider microservice in the initial scenario may continue to be maintained. This may be specifically determined based on an actual situation, and is not limited herein.

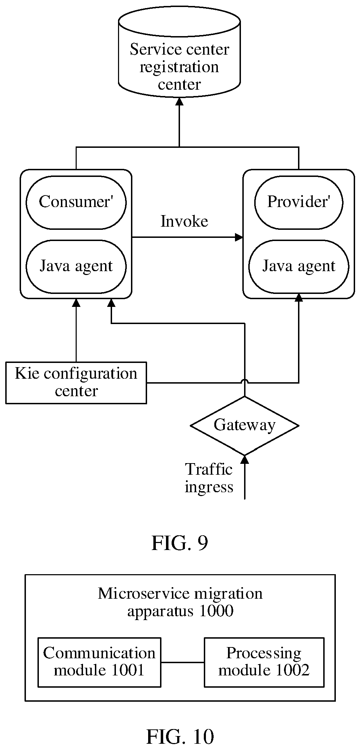

Further, the user may deliver a microservice subscription policy and a configuration monitoring policy to the cloud platform by using the kie configuration center. Then, the cloud platform may shield interaction between the consumer' microservice and the nacos registration center and the nacos configuration center, and shield interaction between the provider' microservice and the nacos registration center and the nacos configuration center. In this case, migration of the consumer microservice and the provider microservice is finally implemented. The scenario in this case may be switched from the initial scenario shown in FIG. 4 to the scenario shown in FIG. 9.

The following describes a microservice migration apparatus provided in an embodiment of this application. The microservice migration apparatus is mainly provided based on the microservice migration method described in FIG. 3A and FIG. 3B.

For example, FIG. 10 shows a microservice migration apparatus. The apparatus may be deployed on a cloud platform. The cloud platform may be configured to manage an instance that provides a microservice. As shown in FIG. 10, the microservice migration apparatus 1000 may include a communication module 1001 and a processing module 1002. The communication module 1001 is configured to obtain stored first microservice configuration information of a target microservice from a first configuration center running on a first instance. The processing module 1002 is configured to generate second microservice configuration information of a migrated target microservice based on the first microservice configuration information. The processing module 1002 is further configured to send the second microservice configuration information to a second configuration center running on a second instance, where the second configuration center is configured to store configuration information of the migrated target microservice.

In some embodiments, when generating the second microservice configuration information of the migrated target microservice based on the first microservice configuration information, the processing module 1002 is specifically configured to: perform format conversion on the first microservice configuration information of the target microservice, to generate the second microservice configuration information corresponding to a microservice type of the second configuration center.

In some embodiments, the processing module 1002 is further configured to bring the first configuration center offline in response to a first offline instruction.

In some embodiments, before sending the second microservice configuration information to the second configuration center running on the second instance, the processing module 1002 is further configured to: obtain a correspondence between the second instance and the first configuration center; and create, based on the second microservice configuration information and the correspondence, the second instance for running the second configuration center.

In some embodiments, when obtaining the correspondence between the second instance and the first configuration center, the processing module 1002 is specifically configured to: obtain a correspondence between an identifier of the second instance and the first configuration center, where the identifier includes an internet protocol IP address and/or an instance ID.

In some embodiments, the processing module 1002 is further configured to provide a first configuration interface, where the first configuration interface is configured to receive a configuration center management policy set by a user, and the configuration center management policy is used to switch configuration monitoring of the target microservice from the first configuration center to the second configuration center.

In some embodiments, a service type of the first configuration center is different from the service type of the second configuration center.

In some embodiments, before generating the second microservice configuration information of the migrated target microservice based on the first microservice configuration information that is of the target microservice and that is stored in the first configuration center, the processing module 1002 is further configured to provide a second configuration interface, where the second configuration interface is configured to receive the service type that is of the second configuration center and that is set by the user.

In some embodiments, the communication module 1001 is further configured to send a first microservice registration request to a first registration center, where the first microservice registration request is used to request to register the migrated target microservice with the first registration center, and microservice registration with the first registration center has been performed on the target microservice. The communication module 1001 is further configured to send a second microservice registration request to a second registration center running on a third instance, where the second microservice registration request is used to request to register the migrated target microservice with the second registration center.

In some embodiments, the processing module 1002 is further configured to bring the first registration center offline in response to a second offline instruction.

In some embodiments, the first microservice configuration information includes one or more of the following: a startup parameter of the target microservice, an identifier of the target microservice, a quantity of threads related to the target microservice, a cache size related to the target microservice, active data, a blocklist, or a trustlist.

In some embodiments, both the communication module 1001 and the processing module 1002 may be implemented by software, or may be implemented by hardware. For example, the following uses the communication module 1001 as an example to describe an implementation of the communication module 1001. Similarly, for an implementation of the processing module 1002, refer to the implementation of the communication module 1001.

The module is used as an example of a software functional unit, and the communication module 1001 may include code run on a computing instance. The computing instance may include at least one of a physical host (computing device), a virtual machine, and a container. Further, there may be one or more computing instances. For example, the communication module 1001 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region or between VPCs in different regions, and interconnection between VPCs is implemented through the communication gateway.

The module is used as an example of a hardware functional unit, and the communication module 1001 may include at least one computing device, for example, a server. Alternatively, the communication module 1001 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The plurality of computing devices included in the communication module 1001 may be distributed in a same region, or may be distributed in different regions. The plurality of computing devices included in the communication module 1001 may be distributed in a same AZ, or may be distributed in different AZs. Similarly, the plurality of computing devices included in the communication module 1001 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the communication module 1001 may be configured to perform any step in the microservice migration method described above, and the processing module 1002 may be configured to perform any step in the method provided in the foregoing embodiments. Steps that the communication module 1001 and the processing module 1002 are responsible for implementing may be specified as required. The communication module 1001 and the processing module 1002 implement different steps in the method provided in the foregoing embodiments, to implement all functions of the microservice migration apparatus 1000.

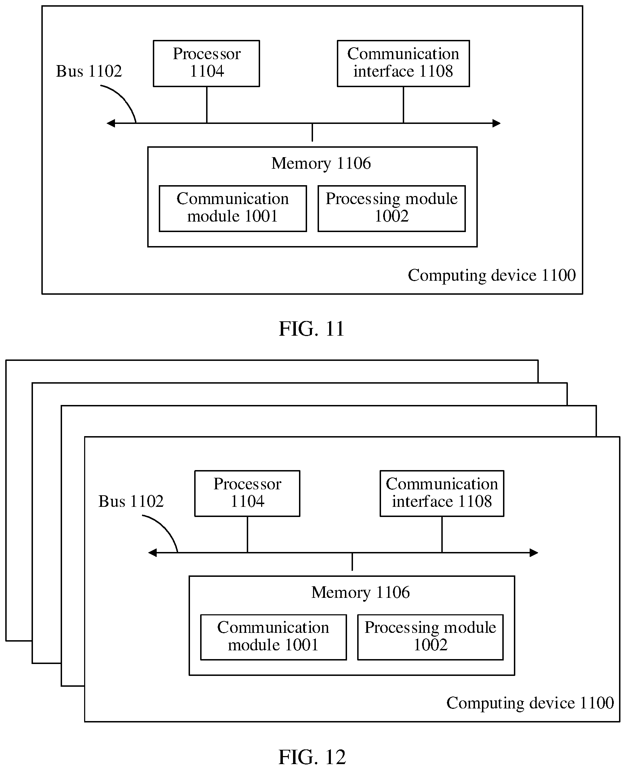

This application further provides a computing device 1100. As shown in FIG. 11, the computing device 1100 includes a bus 1102, a processor 1104, a memory 1106, and a communication interface 1108. The processor 1104, the memory 1106, and the communication interface 1108 communicate with each other through the bus 1102. The computing device 1100 may be a server or a terminal device. It should be understood that quantities of processors and memories in the computing device 1100 are not limited in this application.

The bus 1102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 11 for representation, but it does not indicate that there is only one bus or only one type of bus. The bus 1102 may include a path for transmitting information between various components (for example, the memory 1106, the processor 1104, the communication interface 1108) of the computing device 1100.

The processor 1104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1106 stores executable program code, and the processor 1104 executes the executable program code to separately implement functions of the communication module 1001 and the processing module 1002, so as to implement all or some of the steps in the method in the foregoing embodiments. In other words, the memory 1106 stores instructions for performing all or some of the steps in the method in the foregoing embodiments.

Alternatively, the memory 1106 stores executable code, and the processor 1104 executes the executable code to implement the functions of the microservice migration apparatus 1000, so as to implement all or some of the steps in the method in the foregoing embodiments. In other words, the memory 1106 stores instructions for performing all or some of the steps in the method in the foregoing embodiments.

The communication interface 1103 implements communication between the computing device 1100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 12, the computing device cluster includes at least one computing device 1100. A memory 1106 in one or more computing devices 1100 in the computing device cluster may store same instructions for performing all or some of the steps in the method in the foregoing embodiments.

In some possible implementations, the memory 1106 in the one or more computing devices 1100 in the computing device cluster may alternatively separately store some instructions for performing all or some of the steps in the method in the foregoing embodiments. In other words, a combination of one or more computing devices 1100 may jointly execute the instructions for performing all or some of the steps in the method in the foregoing embodiments.

It should be noted that memories 1106 in different computing devices 1100 in the computing device cluster may store different instructions, and are respectively configured to execute some functions of the microservice migration apparatus 1000. In other words, the instructions stored in the memories 1106 in different computing devices 1100 may implement functions of one or more of the communication module 1001 and the processing module 1002.

In some possible implementations, the one or more computing devices in the computing device cluster may be connected through a network. The network may be a wide area network, a local area network, or the like.

According to the method in the foregoing embodiments, an embodiment of this application provides a computer-readable storage medium. The computer-readable storage medium stores a computer program. When the computer program is run on a processor, the processor is enabled to perform the method in the foregoing embodiments.

According to the method in the foregoing embodiments, an embodiment of this application provides a computer program product. When the computer program product runs on a processor, the processor is enabled to perform the method in the foregoing embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The method steps in embodiments of this application may be implemented by hardware, or may be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and can write information into the storage medium. Certainly, the storage medium may alternatively be a component of the processor. The processor and the storage medium may be disposed in an ASIC.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid state disk, SSD)), or the like.

It may be understood that various numbers in embodiments of this application are merely used for differentiation for ease of description, and are not used to limit the scope of embodiments of this application.

## Claims

1. A microservice migration method, wherein the method is applied to a cloud platform, the cloud platform is configured to manage an instance that provides a microservice, and the method comprises:
obtaining stored first microservice configuration information of a target microservice from a first configuration center running on a first instance;
generating second microservice configuration information of a migrated target microservice based on the first microservice configuration information; and
sending the second microservice configuration information to a second configuration center running on a second instance, wherein the second configuration center is configured to store configuration information of the migrated target microservice.

2. The method according to claim 1, wherein the generating second microservice configuration information of a migrated target microservice based on the first microservice configuration information comprises:
performing format conversion on the first microservice configuration information of the target microservice, to generate the second microservice configuration information corresponding to a microservice type of the second configuration center.

3. The method according to claim 1 or 2, wherein the method further comprises:
bringing the first configuration center offline in response to a first offline instruction.

4. The method according to any one of claims 1 to 3, wherein before the sending the second microservice configuration information to a second configuration center running on a second instance, the method further comprises:
obtaining a correspondence between the second instance and the first configuration center; and
creating the second instance based on the second microservice configuration information and the correspondence.

5. The method according to claim 4, wherein the obtaining a correspondence between the second instance and the first configuration center comprises:
obtaining a correspondence between an identifier of the second instance and the first configuration center, wherein the identifier comprises an internet protocol IP address and/or an instance ID.

6. The method according to any one of claims 1 to 5, wherein the method further comprises:
providing a first configuration interface, wherein the first configuration interface is configured to receive a configuration center management policy set by a user, and the configuration center management policy is used to switch configuration monitoring of the target microservice from the first configuration center to the second configuration center.

7. The method according to any one of claims 1 to 6, wherein a service type of the first configuration center is different from the service type of the second configuration center.

8. The method according to claim 7, wherein before generating the second microservice configuration information of the migrated target microservice based on the first microservice configuration information that is of the target microservice and that is stored in the first configuration center, the method further comprises:
providing a second configuration interface, wherein the second configuration interface is configured to receive the service type that is of the second configuration center and that is set by the user.

9. The method according to any one of claims 1 to 7, wherein the method further comprises:
sending a first microservice registration request to a first registration center, wherein the first microservice registration request is used to request to register the migrated target microservice with the first registration center, and microservice registration with the first registration center has been performed on the target microservice; and
sending a second microservice registration request to a second registration center running on a third instance, wherein the second microservice registration request is used to request to register the migrated target microservice with the second registration center.

10. The method according to claim 9, wherein the method further comprises:
bringing the first registration center offline in response to a second offline instruction.

11. The method according to any one of claims 1 to 10, wherein the first microservice configuration information comprises one or more of the following:
a startup parameter of the target microservice, an identifier of the target microservice, a quantity of threads related to the target microservice, a cache size related to the target microservice, active data, a blocklist, or a trustlist.

12. A microservice migration apparatus, deployed on a cloud platform, wherein the cloud platform is configured to manage an instance that provides a microservice, and the apparatus comprises:
a communication module, configured to obtain stored first microservice configuration information of a target microservice from a first configuration center running on a first instance; and
a processing module, configured to generate second microservice configuration information of a migrated target microservice based on the first microservice configuration information, wherein
the processing module is further configured to send the second microservice configuration information to a second configuration center running on a second instance, wherein the second configuration center is configured to store configuration information of the migrated target microservice.

13. The apparatus according to claim 12, wherein when generating the second microservice configuration information of the migrated target microservice based on the first microservice configuration information, the processing module is specifically configured to:
perform format conversion on the first microservice configuration information of the target microservice, to generate the second microservice configuration information corresponding to a microservice type of the second configuration center.

14. The apparatus according to claim 12 or 13, wherein the processing module is further configured to:
bring the first configuration center offline in response to a first offline instruction.

15. The apparatus according to any one of claims 12 to 14, wherein before sending the second microservice configuration information to the second configuration center running on the second instance, the processing module is further configured to:
obtain a correspondence between the second instance and the first configuration center; and
create, based on the second microservice configuration information and the correspondence, the second instance for running the second configuration center.

16. The apparatus according to claim 15, wherein when obtaining the correspondence between the second instance and the first configuration center, the processing module is specifically configured to:
obtain a correspondence between an identifier of the second instance and the first configuration center, wherein the identifier comprises an internet protocol IP address and/or an instance ID.

17. The apparatus according to any one of claims 12 to 16, wherein the processing module is further configured to:
provide a first configuration interface, wherein the first configuration interface is configured to receive a configuration center management policy set by a user, and the configuration center management policy is used to switch configuration monitoring of the target microservice from the first configuration center to the second configuration center.

18. The apparatus according to any one of claims 12 to 17, wherein a service type of the first configuration center is different from the service type of the second configuration center.

19. The apparatus according to claim 18, wherein before generating the second microservice configuration information of the migrated target microservice based on the first microservice configuration information that is of the target microservice and that is stored in the first configuration center, the processing module is further configured to:
provide a second configuration interface, wherein the second configuration interface is configured to receive the service type that is of the second configuration center and that is set by the user.

20. The apparatus according to any one of claims 12 to 19, wherein
the communication module is further configured to send a first microservice registration request to a first registration center, wherein the first microservice registration request is used to request to register the migrated target microservice with the first registration center, and microservice registration with the first registration center has been performed on the target microservice; and
the communication module is further configured to send a second microservice registration request to a second registration center running on a third instance, wherein the second microservice registration request is used to request to register the migrated target microservice with the second registration center.

21. The apparatus according to claim 20, wherein the processing module is further configured to:
bring the first registration center offline in response to a second offline instruction.

22. The apparatus according to any one of claims 12 to 21, wherein the first microservice configuration information comprises one or more of the following:
a startup parameter of the target microservice, an identifier of the target microservice, a quantity of threads related to the target microservice, a cache size related to the target microservice, active data, a blocklist, or a trustlist.

23. A computing device, comprising:
at least one memory, configured to store a program; and
at least one processor, configured to execute the program stored in the memory, wherein
when the program stored in the memory is executed, the processor is configured to perform the method according to any one of claims 1 to 11.

24. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 11.

25. A computer-readable storage medium, wherein the computer-readable storage medium stores a computer program, and when the computer program is run on a processor, the processor is enabled to perform the method according to any one of claims 1 to 11.

26. A computer program product, wherein when the computer program product runs on a processor, the processor is enabled to perform the method according to any one of claims 1 to 11.
